Europäisches Patentamt

**European Patent Office**

**Office européen des brevets**

(19)

(11) Veröffentlichungsnummer: **0 020 951**
**B1**

(12)

# EUROPÄISCHE PATENTSCHRIFT

(45) Veröffentlichungstag der Patentschrift:
**08.08.84**

(51) Int. Cl.³: **G 11 B 5/70**

(21) Anmeldenummer: **80102413.4**

(22) Anmeldetag: **05.05.80**

(54) Verfahren zur Herstellung schichtförmiger magnetischer Aufzeichnungsträger.

(30) Priorität: **19.05.79 DE 2920334**

(43) Veröffentlichungstag der Anmeldung:
**07.01.81 Patentblatt 81/1**

(45) Bekanntmachung des Hinweises auf die Patenterteilung:
**08.08.84 Patentblatt 84/32**

(84) Benannte Vertragsstaaten:
**DE FR GB IT NL**

(56) Entgegenhaltungen:
**EP - A - 0 017 834**
**DE - A - 2 442 762**
**DE - A - 2 531 871**
**DE - A - 2 624 442**

(73) Patentinhaber: **BASF Aktiengesellschaft,**
**Carl-Bosch-Strasse 38, D-6700 Ludwigshafen (DE)**

(72) Erfinder: **Lehner, August, Wachenheimer Strasse 4,**
**D-6701 Roedersheim-Gronau 1 (DE)**
Erfinder: **Hartmann, Heinrich, Dr., Weinheimer**
**Strasse 46, D-6703 Limburgerhof (DE)**
Erfinder: **Bachmann, Rudolf, Dr., Winklerstrasse 12,**
**D-6710 Frankenthal (DE)**
Erfinder: **Albert, Kohl, Wiesenstrasse 3,**
**D-6714 Weisenheim (DE)**
Erfinder: **Spoor, Herbert, Dr., Woogstrasse 44,**
**D-6703 Limburgerhof (DE)**
Erfinder: **Mahler, Karl, Dr., Ruedigerstrasse 20,**
**D-7640 Kehl (DE)**
Erfinder: **Balz, Werner, Dr., Carl-Bosch-Strasse 46,**
**D-6703 Limburgerhof (DE)**

**Beschreibung**

Die Erfindung betrifft ein Verfahren zur Herstellung von schichtförmigen magnetischen Aufzeichnungsträgern, bestehend aus einem nichtmagnetischen Trägermaterial und darauf aufgebracht mindestens einer magnetisierbaren Schicht aus in einem organischen Bindemittel feinverteilten anisotropen magnetischen Material, unter Einsatz einer wäßrigen ionomeren Polyurethandispersion.

Magnetische Aufzeichnungsträger dienen mit einigen Ausnahmen zur Aufnahme und Wiedergabe von Ton, Bild und Daten. Die ständig steigenden Anforderungen, welche an diese Aufzeichnungsträger gestellt werden, machen weitere Verbesserungen in mechanischer und elektromagnetischer Hinsicht nötig. So erfordert die Entwicklung in Richtung höherer Aufzeichnungsdichten bei allen genannten Anwendungsformen die Herstellung immer dünnerer Magnetschichten. Aus diesem Grunde muß sowohl die Packungsdichte des magnetischen Materials in der Magnetschicht, die remanente Magnetisierung in Aufzeichnungsrichtung, die gleichmäßige Verteilung des magnetischen Materials in der Schicht, sowie die Oberflächenglätte und die Gleichmäßigkeit der Schicht in hohem Maße verbessert werden. Alle diese Forderungen, die bei erhöhter Aufzeichnungsdichte hinsichtlich Fehlerfreiheit und Pegelkonstanz an die Magnetschicht gestellt werden, lassen sich außer durch den Dispergiergrad des magnetischen Pigments auch in hohem Maße von der Art des verwendeten Bindemittels beeinflussen. Besonders wichtig ist es, daß das Bindemittel das Pigment gut benetzt, um eine völlig homogene Verteilung des Pigments zu erzielen, ferner daß es einen guten Verlauf an der Oberfläche zeigt, ein Umstand, der für den Erhalt glatter Oberflächen wichtig ist und daß das Bindemittel völlig frei von Partikeln ist, die infolge höheren Molekulargewichts nicht mehr einwandfrei löslich sind, sondern vom Lösungsmittel nur noch mehr oder weniger angequollen werden.

Um derartige magnetische Aufzeichnungsträger herzustellen, wurden bisher die das magnetische Material enthaltenden Schichten vorwiegend mit Hilfe hochpolymerer, lösungsmittelhaltiger, physikalisch trocknender oder chemisch vernetzbarer Bindemittel oder Bindemittelgemischen hergestellt. Dabei kamen Lösungsmittel wie zum Beispiel Methyläthylketon, Methylisobutylketon, Äthyl- und Butylacetat, Methanol, Äthanol, Propanol, Butanol, Toluol, Xylol, Tetrahydrofuran und Dioxan zum Einsatz. Von Nachteil sind dabei die nicht umweltfreundlichen Eigenschaften, vor allem Feuergefährlichkeit und Toxizität dieser Lösungsmittel, sowie der relativ hohe Preis. Aus diesen Gründen wurde es schon seit langem als erforderlich angesehen, in geschlossenen Systemen zu arbeiten und das Lösungsmittel über eine zusätzlich zu installierende Rückgewinnungsanlage im Kreislauf zu benutzen.

Es wurde deshalb schon vorgeschlagen, wäßrige Polymerdispersionen bei der Herstellung der für die Fertigung von magnetischen Aufzeichnungsträgern geeigneten Dispersionen der magnetischen Materialien einzusetzen. So beschreiben die DE-OS 2 513 421 und DE-OS 2 513 422 wäßrige Polymerdispersionen auf der Basis vernetzungsfähiger Vinylacetat- oder Acrylat-Polymerer und Melamin/Formaldehyd. Die bei der Herstellung dieser Dispersionen benötigten Hilfsstoffe, wie Schutzkolloide, Verdickungsmittel oder Emulgatoren, führen jedoch bei der Herstellung der Dispersionen der magnetischen Materialien zu Schaumbildung und zu magnetischen Schichten mit erhöhter Schmierneigung.

In der DD-PS 116 693 werden magnetische Aufzeichnungsträger offenbart, bei denen die Magnetschichten mit wäßrigen Dispersionen von Polymerpartikeln mit gegenüber den magnetischen Materialien unterschiedlichem Vorzeichen der elektrischen Ladung hergestellt werden. Nach dieser Patentschrift werden weicheingestellte Polymerdispersionen empfohlen, um knickfeste Magnetschichten mit guter Haftung auf dem Trägermaterial zu erreichen, wie z. B. weich eingestellte Polyacrylate, Copolymerisate von Vinylacetaten mit ungesättigten organischen Säuren, Copolymerisate von Vinyl- und Vinylidenchloriden, Copolymerisate von Styrol und Butadien, Copolymerisate von Acrylester und Styrol sowie Polyurethane deren Teilchengröße nicht größer, zweckmäßig kleiner, als die der magnetischen Pigmente sein soll. Mit derartigen Bindemitteln aufgebaute magnetische Aufzeichnungsträger sind jedoch empfindlich gegen Feuchtigkeit, neigen zum Kleben und Schmieren und außerdem ist die Magnetschicht nicht abriebfest genug.

Der Einsatz von vernetzten kationischen Polyurethanen zur Beschichtung von Leder und Textil und auch für die Herstellung von Magnetschichten wird in der DD-PS 116 248 vorgeschlagen. Diese Polyurethane werden durch Reaktion von Polyharnstoffurethanelektrolyt-Dispersionen, welche durch Umsetzung von aromatischen und/oder aliphatischen Diisocyanaten mit längerkettigen Diolen zu NCOterminalen Präpolymeren, anschließender Kettenverlängerung mit tertiären Stickstoff enthaltenden Diolen, weiterer Umsetzung mit Harnstoff sowie Protonierungs- bzw. Quaternierungsmitteln und anschließender Dispergierung in Wasser gewonnen werden, mit Methylolätherverbindungen hergestellt. Von Nachteil ist dabei, daß eine Vernetzung der Harnstoffgruppen mit N-Methyloläthern notwendig ist. Insbesondere ergeben sich jedoch aus der pH-Empfindlichkeit der Bindemittel-Dispersion Schwierigkeiten. So wäre es erforderlich, beim Dispergieren der meist eine saure oder aber basische Oberfläche aufweisenden magnetischen Materialien diese zuerst dem pH-Wert des Bindemittels anzugleichen. Da bereits geringe Unterschiede im pH-Wert das Polyurethan anvernetzen oder zum Teil koagulieren ließen, würden sich sowohl Schwierigkeiten bei der Verarbeitung der Magnetdispersion ergeben als auch die Qualität der magnetischen Aufzeichnungsträger auf Grund der dadurch verursachten höheren Fehlerzahl beeinträchtigt werden.

Es wurde auch schon vorgeschlagen, in Wasser dispergierte Polyurethan-Ionomeren mit funktionel-

len, zur Salzbildung befähigten Gruppen als Bindemittel für Magnetschichten einzusetzen (EP-A-17 834). Die auf diese Weise erhaltenen Magnetschichten sind jedoch zu weich und ergeben keine hochwertigen Aufzeichnungsschichten.

Aufgabe der Erfindung war es daher, auf Grund der bekannten Vorteile wäßriger Polymerdispersionen, schichtförmige magnetische Aufzeichnungsträger mit Hilfe dieser Bindemittel herzustellen, wobei die geschilderten Nachteile nicht auftreten, d. h. die Aufzeichnungsträger nicht feuchtigkeitsempfindlich sind, nicht zum Verkleben neigen, einen geringen Schichtabrieb aufweisen und ein günstiges Fehlerverhalten zeigen.

Es wurde nun gefunden, daß sich schichtförmige magnetische Aufzeichnungsträger durch Dispergieren eines feinteiligen magnetisch anisotropen Materials in einem Bindemittel, das zu mindestens 40% aus einer wäßrigen ionomeren Polyurethandispersion besteht, Auftragen der Dispersion auf ein nichtmagnetisches Trägermaterial, Ausrichten des magnetisch anisotropen Materials und Trocknen der aufgetragenen Schicht gemäß der Aufgabe herstellen lassen, wenn durch den Einbau von Polyolen als Weichsegmente und Harnstoffgruppen in die Hartsegmente des Polyurethans eine wäßrige ionomere Polyurethandispersion erzeugt wird, mit der Maßgabe, daß sich bei einer Temperatur von 50° C Filme mit einem Elastizitätsmodul zwischen 100 und 650 N/mm$^2$ und einer Pendelhärte nach DIN 53 157 zwischen 25 und 110 s ergeben und daß sich die jeweiligen Werte für Elastizitätsmodul und Pendelhärte bei Raumtemperatur um nicht mehr als den Faktor 2,5 erhöhen.

Besonders vorteilhaft lassen sich die schichtförmigen magnetischen Aufzeichnungsträger durch Dispergieren eines feinteiligen magnetisch anisotropen Materials in einem Bindemittelgemisch, das zu 40 bis 95% aus einer wäßrigen ionomeren Polyurethandispersion und zu 5 bis 60% aus einem nichtionischen Polymeren besteht, Auftragen der Dispersion auf ein nichtmagnetisches Trägermaterial, Ausrichten des magnetisch anisotropen Materials und Trocknen der aufgetragenen Schicht, aufgabengemäß herstellen, wenn durch den Einbau von Polyolen als Weichsegmente und Harnstoffgruppen in die Hartsegmente des Polyurethans eine wäßrige ionomere Polyurethandispersion erzeugt wird, mit der Maßgabe, daß sich bei einer Temperatur von 50° C Filme mit einem Elastizitätsmodul zwischen 100 und 650 N/mm$^2$ und einer Pendelhärte nach DIN 53 157 zwischen 25 und 110 s ergeben und daß sich die jeweiligen Werte für Elastizitätsmodul und Pendelhärte bei Raumtemperatur um nicht mehr als den Faktor 2,5 erhöhen und das nichtionische Polymere ein thermoplastisches Polyurethan ist.

Um mit den vorgenannten Polyurethandispersionen knitterfeste Magnetschichten und mit einer guten Haftung der Schicht auf dem Trägermaterial zu erreichen, hat es sich als zweckmäßig herausgestellt, wenn die entsprechenden Filme dieser Polymeren bei Raumtemperatur (23° C) eine Reißfestigkeit von größer 25 N/mm$^2$ und eine Reißdehnung von mindestens 50%, zweckmäßigerweise größer 100%, aufweisen, sowie bei der Pendelhärte Werte von 150 s und für den Elastizitätsmodul Werte von 1000 nicht überschreiten.

Aus der Reihe der beim erfindungsgemäßen Verfahren eingesetzten wäßrigen ionomeren Polyurethandispersionen werden vorteilhafterweise solche anionischen ausgewählt, bei denen das Gegenion bei einem pH-Wert zwischen 6 und 10 aus Ammoniak oder einem flüchtigen Amin gebildet wird. Daraus resultiert durch das beim Trocknen der Magnetschicht zumindest teilweise Verflüchtigen des Ammoniaks oder Amins eine erhöhte Wasserfestigkeit der Schicht.

Im Rahmen der Erarbeitung des erfindungsgemäßen Verfahrens hat sich ebenfalls herausgestellt, daß die gewünschten Eigenschaften auch mit solchen ionomeren Polyurethandispersionen erzielt werden können, die durch Kombination mit anderen nichtionomeren Polymeren, z. B. Polyvinylidenchlorid, Vinylchlorid-Acrylnitrilpolymeren, Polyvinylformal, Polyurethane ohne ionische Gruppen, Di- und/oder Polyisocyanate und Epoxidharzen erhalten werden. Dabei hat es sich als vorteilhaft erwiesen, wenn dem z. B. in Aceton gelösten Polyurethanionomeren das andere Polymere zugegeben, dann das Wasser eingebracht und das organische Lösungsmittel abdestilliert wird. Dadurch läßt sich die Verwendung eines ansonsten bei der Herstellung der Bindemitteldispersion erforderlichen Dispergiermittels vermeiden. Außerdem hat sich überraschenderweise gezeigt, daß mit den auf diese Weise hergestellten ionomeren Polyurethandispersionen die mechanischen Eigenschaften des Bindemittels, wie Elastizitätsmodul und Pendelhärte verbessert werden, bei der Herstellung der Magnetmaterialdispersion die Schaumbildung unterbleibt sowie bei den resultierenden Magnetschichten Abrieb und Reibung günstig beeinflußt werden. Vorteilhaft werden Dispersionen eingesetzt, die aus 40 bis 95 Gew.-Teile an Polyurethanionomeren und 5 bis 60 Gew.-Teilen an nichtionomeren Polymeren bestehen. Besonders günstig sind Mischungen aus 60 bis 95 Gew.-Teilen Polyurethanionomeres und 5 bis 40 Gew.-Teilen nichtionomerem Polymer.

Weiterhin hat es sich als zweckmäßig herausgestellt, wenn die erfindungsgemäß eingesetzten Polyurethanionomeren das gleiche Vorzeichen der elektrischen Ladung wie das in das Bindemittel einzuarbeitende magnetische Material besitzen, da sonst die Gefahr der Koagulation des Bindemittels besteht.

Geeignete Ausgangsstoffe für die Herstellung der erfindungsgemäß eingesetzten Polyurethanionomeren sind Verbindungen mit mehreren reaktionsfähigen Wasserstoffatomen, die im wesentlichen linear sind und ein Molekulargewicht von 300 bis 10 000, vorzugsweise 500 bis 4000 haben. Diese Verbindungen besitzen endständige Hydroxyl-, Carboxyl-, Amino- oder Mercaptogruppen, bevorzugt sind Polyhydroxyverbindungen, wie Polyester, Polyacetale, Polyäther, Polythioäther, Polyamide, Epoxide oder Polyesteramide. Als Polyester seien die Polymerisationsprodukte des Äthylenoxids, Propylenoxids, Tetrahydrofurans, Butylenoxids sowie ihre Misch- oder Pfropfmischpolymerisationsprodukte sowie die durch Kondensation von mehrwertigen Alkoholen oder Mischungen derselben gewonnenen Kondensate oder die durch Alkoxylierung von mehrwertigen Alkoholen, Aminen, Polyaminen oder Aminoalkoholen gewonnenen Produkte genannt. Als Polyacetale kommen z. B. die aus Hexandiol und Formaldehyd hergestellten Verbindungen in Frage. Unter den Polythioäthern sind insbesondere die Kondensationsprodukte von Thiodiglykol und seiner Mischung mit anderen Glykolen oder Polyhydroxylverbindungen geeignet.

Auch bereits Urethan- oder Harnstoffgruppen enthaltende Polyhydroxylverbindungen sowie ggf. modifizierte natürliche Polyhydroxylverbindungen wie Rizinusöl oder Kohlehydrate sind verwendbar. Selbstverständlich können zur Variation der Hydrophilie bzw. der Hydrophobie und der mechanischen Eigenschaften der Verfahrensprodukte Mischungen verschiedener Polyhydroxylverbindungen eingesetzt werden.

Als Polyisocyanate sind alle aromatischen oder aliphatischen Diisocyanate geeignet, wie z. B. 1,5-Naphthylendiisocyanat, 4, 4'-Diphenylmethandiisocyanat, 4,4'-Diphenyldimethandiisocyanat, Di- oder Tetraalkyldiphenylmethandiisocyanat, 4,4'-Dibenzyldiisocyanat, 1,3-Phenylendiisocyanat, die Isomeren des Toluylendiisocyanats, ggf. in Mischung, chlorierte oder bromierte Diisocyanate, phosphorhaltige Diisocyanate, Butan-1,4-diisocyanat, Hexan-1,6-diisocyanat, Dicyclohexylmethandiisocyanat oder Cyclohexan-1,4-diisocyanat. Insbesondere eignen sich teilweise verkappte Polyisocyanate, welche die Bildung selbstvernetzender Polyurethane ermöglichen, z. B. dimeres Toluylendiisocyanat, oder mit beispielsweise Phenol, tert. Butanol, Phthalimid oder Caprolactam, partiell umgesetzte Polyisocyanate.

Zu den Kettenverlängerungsmitteln mit reaktionsfähigen Wasserstoffatomen zählen:

1. die üblichen gesättigten oder ungesättigten Glykole, wie Äthylenglykol oder Kondensate des Äthylenglykols, Butandiol, Propandiol-1,2, Propandiol-1,3, Neopentylglykol, Dioxäthoxy-hydrochinon, Butendiol, Dioxäthylendian, mono- oder bisalkoxylierte aliphatische, cycloaliphatische, aromatische oder heterocyclische Amine (prim.), wie beispielsweise N-Methyldiäthanolamin, N-Butyldiäthanolamin, N,N-Bis-$\alpha$-aminopropyl-N-methylamin, N-Oleyldiäthanolamin, N-Cyclohexyldiisopropylamin, N,N-Dioxäthyl-p-toluidin, N,N-Dioxypropylnaphthylamin, polyäthoxyliertes N-Butyldiäthanolamin, polypropoxyliertes N-Methyldiäthanolamin (MG 300 bis 4000), Polyester mit tertiären Aminogruppen oder Dimethyl-bis-oxäthylhydrazin,
2. die aliphatischen, cycloaliphatischen oder aromatischen Diamine, wie Äthylendiamin, Hexamethylendiamin, 1, 4-Cyclohexylendiamin, Benzidin, Diaminodiphenylmethan, die Isomeren des Phenylendiamins, Hydrazin oder lediglich Ammoniak,
3. Aminoalkohole, wie Äthanolamin, Propanolamin oder Butanolamin,
4. die aliphatischen, cycloaliphatischen, aromatischen oder heterocyclischen Dicarbonsäuren, wie Oxalsäure, Malonsäure, Bernsteinsäure, Glutarsäure, Adipinsäure, Pimelinsäure, Korksäure, Azelainsäure, die isomeren Phthalsäuren, Diphensäure, die isomeren Naphthalsäuren, Maleinsäuren, Fumarsäure, Sulfodiessigsäure, Diglykolsäure, Thiodiglykolsäure, Methylen-bis-thioglykolsäure, die isomeren Pyridindicarbonsäuren oder die isomeren Chinolindicarbonsäuren,
5. die aliphatischen, cycloaliphatischen, aromatischen oder heterocyclischen Aminocarbonsäuren, wie Glycin, $\alpha$- oder $\beta$-Alanin, 6-Aminocapronsäure, 4-Aminobutter, die isomeren Aminobenzoesäuren oder die isomeren Aminonaphthoesäuren,
6. Wasser,
7. höherfunktionelle Kettenverlängerungsmittel, die ganz oder anteilig eingesetzt werden, beispielsweise Diäthylentriamin, Triäthylentetramin, Triäthylenpentomin, Pentaäthylenhexamin, Hexaäthylenpentamin, Glycerin, Erithrit, Mesoerithrit, Arabit, Adonit, Xylit, Sorbit, Dulcit, 1,3-Diaminoisopropanol, 1, 2-Diaminopropanol, Trishydroxymethylaminomethan, 2-Amino-2-methyl-1,3-propandiol, 2-Amino-2-äthyl-1,5-propandiol, 2-Amino-1,3-propandiol, sowie die mono-oxalkylierten Polyamine, wie z. B. N-Oxäthylendiamin, N-Oxäthylhydrazin, N-Oxäthylhexamethylendiamin.

Die Herstellung der Polyurethanmasse erfolgt in an sich bekannter Weise mit oder auch ohne Anwesenheit von Lösungsmitteln (DE-PS 1 237 306, DE-PS 1 495 745, DE-AS 1 495 847). Im allgemeinen wird zunächst aus der höhermolekularen Polyhydroxylverbindung und dem Polyisocyanat mit oder ohne Lösungsmittel bei etwa 50 bis 150° C ein Voraddukt hergestellt, das dann ggf. in Lösung mit den ggf. mitverwendeten Kettenverlängerungsmitteln bei 30° C bis 150° C weiter umgesetzt wird. Auch lassen sich Polyhydroxylverbindung und Kettenverlängerungsmittel vorher mischen. Zudem kann die Umsetzung in Gegenwart von Katalysatoren, wie tert. Aminen und/oder metallorganischen Verbindungen erfolgen.

In diesen Polyurethanmassen werden dann die zur Salzbildung befähigten Gruppen durch den Zusatz von Basen in Salzform überführt. Polyurethane, die z. B. tert. Stickstoffgruppen im Molekül tragen, werden dann z. B. durch Zusatz von Säuren in die Salzform überführt. Als salzbildende Mittel für die Gruppen sind geeignet: anorganische oder organische Basen wie:

1. monofunktionelle primäre, sekundäre oder tertiäre Amine wie beispielsweise Methylamin, Diäthylamin, Triäthylamin, Trimethylamin, Dimethylamin, Äthylamin, Tributylamin, Pyridin, Anilin oder Toluidin, alkoxylierte Amine, wie Äthanolamin, Diäthanolamin, Triäthanolamin, Methyldiäthanolamin oder Oleyldiäthanolamin sowie polyfunktionelle Polyamine, bei denen die einzelnen Aminogruppen ggf. unterschiedliche Basizität aufweisen, wie z. B. die durch Hydrierung von Additionsprodukten von Acrylnitril an primäre oder sekundäre Amine erhaltenen Polyamine, ganz oder teilweise alkylierte Polyamine, wie N,N-Dimethyläthylendiamin, ferner Verbindungen wie α-Aminopyridin oder N,N-Dimethylhydrazin; als besonders zweckmäßig haben sich solche Amine erwiesen, welche einen Siedepunkt von kleiner 120°C besitzen;
2. anorganische Basen, basisch reagierende Verbindungen wie Ammoniak, einwertige Metallhydroxyde, -carbonate oder -oxyde, wie Natriumhydroxyd, Kaliumhydroxyd, Natriumcarbonat, Kaliumcarbonat oder Natriumhydrogencarbonat.

Salzbildende Mittel der Gruppe 2 sind auch anorganische und organische Säuren sowie Verbindungen mit reaktiven Halogenatomen, wie z. B. Salzsäure, Salpetersäure, Amidosulfonsäure, Ameisensäure, Essigsäure, Glykolsäure und Butylbromid.

Für die bereits angegebenen, im Rahmen des erfindungsgemäßen Verfahrens besonders vorteilhaften Kombinationen der Polyurethanionomeren mit anderen Polymeren eignen sich

1. Polyurethanelastomere ohne ionische Gruppen, wie sie z. B. in der DE-OS 2 442 763 oder in der DE-PS 1 106 956 beschrieben sind,
2. Polymerisate und/oder Copolymerisate von vinylgruppenhaltigen Monomeren wie Acrylester, Methacrylester, ungesättigten organischen Säuren, Vinylacetaten, Vinylchlorid, Vinylidenchlorid, Styrol,
3. Kondensationsprodukte wie z. B. Polyvinylformale, Phenoxyharze, Epoxyharze, Polyesterharze, Siliconharze.
4. Diisocyanate, wie z. B. Toluylendiisocyanat, Diphenylmethandiisocyanat oder Hexamethylendiisocyanat und/oder Polyisocyanate, wie sie z. B. in den DE-Patentschriften 1 090 196, 1 201 394 und 1 222 067 beschrieben sind.

Bei der Wahl des Lösungsmittels ist zu beachten, daß bei der Herstellung der Polyurethanmasse kein Lösungsmittel verwendet wird, das unter den Reaktionsbedingungen mit Isocyanatgruppen reagierende funktionelle Gruppen besitzt. Im erfindungsgemäßen Verfahren kann jedes beliebige Lösungsmittel eingesetzt werden, das mit der Polyurethanmasse, den verwendeten cyclischen Alkylierungs- oder Acetylierungsmitteln und den als Quaternierungsmittel oder Salzbildner verwendeten Verbindungen und mit den zur Kombination ausgewählten Polymeren nicht in Reaktion tritt.

Bevorzugte Lösungsmittel sind ggf. halogenierte Kohlenwasserstoffe, Ketone, Ester oder Nitrile, wie z. B. Aceton, Methyläthylketon, tert. Butanol, Tetrahydrofuran, Acetonitril, Äthylacetat, Methylenchlorid, Chloroform, Tetrachlorkohlenstoff, Dimethylformamid oder Dimethylsulfoxyd.

Weitere geeignete Polyurethanionomere lassen sich auch nach Methoden, wie sie in der Angewandten Chemie 82 (1970), Heft 2, Seiten 53 bis 90, beschrieben sind, herstellen.

Werden die angeführten Polyurethanionomere oder zur Kombination damit ausgewählten Polymere in Masse hergestellt, dann müssen diese für die Weiterverarbeitung in einem der vorgenannten Lösungsmittel gelöst werden.

Die weitere Verarbeitung der wäßrigen ionomeren Polyurethandispersionen mit dem magnetischen Material und den üblichen Hilfsstoffen zu magnetischen Aufzeichnungsträgern kann in an sich bekannter Weise erfolgen.

Als Magnetpigmente können die an sich bekannten verwendet werden, die die Eigenschaften der resultierenden Magnetschichten natürlich mitbestimmen. Als geeignete Magnetpigmente seien beispielhaft genannt: Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt (z. B. hergestellt nach den Angaben in der deutschen Patentschrift 1 247 026). Bevorzugte Magnetpigmente sind nadelförmiges Gamma-Eisen(III)-oxid sowie ferromagnetisches Chromdioxid. Die Teilchengröße beträgt im allgemeinen 0,2 bis 2 μm, bevorzugt ist der Bereich von 0,3 bis 0,8 μm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gew.-%, bezogen auf die Magnetschicht.

Das Verhältnis von Magnetpigment zu Bindemittel in den erfindungsgemäßen Aufzeichnungsmaterialien liegt im allgemeinen zwischen 1 bis 10 und insbesondere 3 bis 6 Gew.-Teilen Magnetpigment zu einem Gew.-Teil des Bindemittels bzw. Bindemittelgemisches. Es ist ein besonderer Vorteil, daß aufgrund des vorzüglichen Pigmentbindevermögens der Polyurethanionomere hohe Magnetpigmentkonzentrationen in den Magnetschichten möglich sind, ohne daß die mechanischelastischen Eigenschaften verschlechtert werden oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyester, wie Polyäthylenterephthalat, im allgemeinen in Stärken von 4 bis 200 μm und insbesondere von 10 bis 36 μm. In neuerer Zeit ist auch die Anwendung von Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der magnetischen Aufzeichnungsträger kann in bekannter Weise erfolgen. Zweckmäßig wird die in einer Dispergiermaschine, z. B. einer Stahlkugelmühle oder einer Rührwerksmühle, aus dem Magnetpigment und dem Polyurethanisomeren unter Zusatz von Dispergiermitteln und anderen Zusätzen hergestellte Magnetpigmentdispersion filtriert und mit der üblichen Beschichtungsmaschine, z. B. mittels eines Linealgießers, auf den nicht magnetischen Träger aufgetragen. In der Regel erfolgt eine magnetische Ausrichtung, bevor die flüssige Beschichtungsmischung auf dem Träger getrocknet wird; letzteres geschieht zweckmäßigerweise während 2 bis 5 Minuten bei Tempraturen von 80 bis 120°C.

Die Magnetschichten können auf üblichen Maschinen durch Hindurchführen zwischen geheizten und polierten Walzen, ggf. bei Anwendung von Druck und Temperaturen von 50 bis 100°C, vorzugsweise 60 bis 80°C, geglättet und verdichtet werden. Die Dicke der Magnetschicht beträgt im allgemeinen 3 bis 20 μm, vorzugsweise 4 bis 10 μm. Im Falle der Herstellung von flexiblen Magnetbändern werden die beschichteten Folien in der Längsrichtung in den üblichen, meist nach Zoll festgelegten Breiten geschnitten.

Diese erfindungsgemäß hergestellten magnetischen Aufzeichnungsträger besitzen gegenüber solchen, welche mit dem Stand der Technik entsprechenden als Bindemittel in Wasser hergestellt sind, eine verbesserte Homogenität der Magnetschicht und aufgrund dieser sowohl gleichmäßigen wie auch homogenen Magnetschicht ein deutlich verringertes Fehlerniveau. Zusätzlich muß noch die verbesserte Verschleißfestigkeit und die verringerte Empfindlichkeit gegen Feuchtigkeitseinfluß der erfindungsgemäß hergestellten magnetischen Aufzeichnungsträger hervorgehoben werden. Diese Vorteile lassen sich zudem noch mit einem Bindemittelsystem erreichen, bei dem die bekannten Nachteile und Risiken beim Einsatz von organischen Lösungsmitteln vermieden werden. Weitere Vorteile des erfindungsgemäßen Verfahrens liegen in der verkürzten Pigmentierzeit des magnetischen Materials in den Polyurethanionomeren und zudem läßt sich das magnetische Material herstellfeucht einsetzen.

Das erfindungsgemäße Verfahren sei anhand folgender Beispiele und Vergleichsversuche näher erläutert; wobei zur besseren Vergleichbarkeit die Herstellung der magnetischen Aufzeichnungsträger in gleicher Weise erfolgt, falls erforderlich jedoch mit Hilfe üblicher Verfahrensänderungen noch variiert werden kann.

## Beispiel 1

Zu einem in Tetrahydrofuran als Lösungsmittel hergestellten Isocyanat-Präpolymeren, bestehend aus 166 Teilen Hexandiolpolycarbonat mit einem Molekulargewicht von 2000, 4, 5 Teilen Butandiol-1,4 und 98 Teilen Dicyclohexylmethandiisocyanat, werden 23,4 Teile Aminoäthyläthanolamin, gelöst in Tetrahydrofuran, gegeben. Nach einer Reaktionszeit von einer Stunde bei einer Temperatur von 60°C werden 11,2 Teile Bernsteinsäureanhydrid zugesetzt. Bei einer Temperatur von 65°C ist die Umsetzung nach 4 Stunden beendet, so daß dann das Reaktionsprodukt mit 11,2 Teilen Triäthanolamin neutralisiert wird. Durch anschließende Zugabe von 69 Teilen eines Additionsproduktes aus 3 Mol Toluylendiisocyanat, 0,75 Mol Trimethylolpropan und 0,375 Mol Butandiol-1,3 als 75%ige Lösung in Äthylacetat und 70 Teilen Wasser auf 30 Teile Polyurethanionomere und Abdestillieren des Tetrahydrofurans wird eine stabile wäßrige Polyurethan-Dispersion erhalten. An daraus hergestellten Filmen werden E-Modul und Pendelhärte bei 50°C und 23°C bestimmt. Die Ergebnisse sind in der Tabelle angegeben.

Nun werden in einer Stahlkugelmühle mit einem Inhalt von 30 000 Volumenteilen, welche mit 40 000 Teilen Kugeln gefüllt ist und mit 50 Upm betrieben wird, 6000 Teile eines nadelförmigen Gamma-Eisen(III)-oxids mit einer Koerzitivfeldstärke von 24,3 kA/m in einer Lösung aus 240 Teilen 30%igem Ammonium-Polyacrylat, 100 Teilen 10%igem Ammoniak und 3900 Teilen Wasser 10 Stunden lang dispergiert. Zu diesem Ansatz werden dann 3750 Teile der oben hergestellten Polyurethandispersion sowie noch 60 Teile eines handelsüblichen Siliconöls zugesetzt und nochmals 30 Minuten dispergiert.

Mit der so erhaltenen Magnetmaterial-Dispersion wird nach dem Filtrieren durch einen Papierfilter mit einer Porenweite von 5 μm mittels eines üblichen Linealgießers eine Polyäthylenterephthalatfolie von 12 μm Dicke beschichtet. Vor der Trocknung bei 80 bis 120°C wird die beschichtete Folie zur Ausrichtung der Gamma-Eisen(III)oxid-Teilchen durch ein homogenes Magnetfeld geführt. Danach erfolgt noch eine Glättung der Schicht durch Kalandrieren bei 80°C und 23 N/mm² Liniendruck. Die Dicke der Magnetschicht beträgt 5,0 ± 0,3 µm. Die beschichtete Folie wird anschließend in 3,81 mm breite Magnetbänder geschnitten und folgenden Prüfungen unterzogen:

Test 1:

Dauerlauf-Abrieb

Mit dieser Messung werden die Abriebeigenschaften eines Bandes burteilt. Es wird der Abrieb in Form des Gewichtsverlustes einer Bandschleife in mg gemessen. Dabei beträgt die Schleifenlänge 95 cm, die Bandgeschwindigkeit 4 m/sec, der Bandzug 35 cN und die Laufzeit 1 Stunde, bei einer Umgebungstemperatur von 23°C und einer rel. Luftfeuchte von 50%.

Test 2:

Reibungskoeffizient, Schicht/Stahl, vor bzw. nach Dauerlauf

Die Bestimmung der Reibungszahlen erfolgt nach DIN 45 522, Blatt 1. Die Reibungskoeffizienten werden am unbenutzten Band und am durch Dauerlauf benutzten Band gemessen.

Test 3:

Quasistatische Reibung

Die Reibungszahl wird durch Messen einer Zugkraft bestimmt, die ein über eine feststehende Meßtrommel geführtes Magnetband durch Reibung erzeugt. Die Meßtrommel ist eine Stahl-Trommel mit einer Oberflächenrauhigkeit von ca. 0,15 µm und einem Durchmesser von 70 mm. Das Bandstück ist 25 cm lang und wird bei einem Bandzug von 20 cN mit einer Geschwindigkeit von 1 mm/sec und einem Umschlingungswinkel von 180° über die Trommel geführt. Der Zug an der Meßdose F ist ein Maß für die Reibungszahl µ und zwar nach

$$\mu = \frac{1}{\pi} \cdot \ln \frac{F}{20}.$$

Test 4:

Dynamische Reibung

Die Reibungszahl hierfür wird entsprechend dem Verfahren nach Test 3 gemessen, mit dem Unterschied, daß sich die Meßtrommel mit einer Geschwindigkeit von 9,5 cm/sec. dreht.

Test 5:

Klebetest

Die Prüfung der Klebeneigung von Magnetbändern erfolgt nach MIL-T-21 029 A, wobei zwischen Verkleben und Schichtabzug unterschieden wird.
Die Meßergebnisse sind in der Tabelle angegeben.

Beispiel 2

Zu einem in Aceton als Lösungsmittel hergestellten Isocyanat-Präpolymeren, bestehend aus 170 Teilen eines Polyesters aus Adipinsäure, Butandiol-1,4 und Glykol mit einem Molekulargewicht von 2000, 4,5 Teilen Butandiol-1,4 und 98 Teilen Dicyclohexylmethandiisocyanat, werden 23,4 Teile Aminoäthyläthanolamin, gelöst in Aceton gegeben. Nach einer Reaktionszeit von ¹/₂ Stunde bei einer Temperatur von 40°C werden 11,2 Teile Bernsteinsäureanhydrid zugesetzt. Bei einer Temperatur von 40°C ist die Umsetzung nach 5 Minuten beendet, so daß dann das Reaktionsprodukt mit 11,2 Teilen Triäthanolamin neutralisiert wird. Durch anschließende Zugabe von 69 Teilen eines Additionsproduktes aus 3 Mol Toluylendiisocyanat, 0,75 Mol Trimethylolpropan und 0,357 Mol Butandiol-1,3 als 75%ige Lösung in Äthylacetat und 70 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Beispiel 3

Zu einem in Aceton als Lösungsmittel hergestellten Isocyanat-Präpolymeren, bestehend aus 170 Teilen eines Polyesters aus Adipinsäure, Butandiol-1,4 und Hexandiol-1,6 mit einem Molekulargewicht von 2000, 4,5 Teilen Butandiol-1,4 und 98 Teilen Dicyclohexylmethandiisocyanat werden 23,4 Teile Aminiäthyläthanolamin, gelöst in Aceton gegeben. Nach einer Reaktionszeit von $1/2$ Stunde bei einer Temperatur von 40° C werden 11,2 Teile Bernsteinsäureanhydrid zugesetzt. Bei einer Temperatur von 40° C ist die Umsetzung nach 5 Minuten beendet, so daß dann das Reaktionsprodukt mit 11,2 Teilen Triäthanolamin neutralisiert wird. Durch anschließende Zugabe von 69 Teilen eines Additionsproduktes aus 3 Mol Toluylendiisocyanat, 0,75 Mol Trimethylolpropan und 0,375 Mol Butandiol-1,3 als 75%ige Lösung in Äthylacetat und von 70 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Beispiel 4

Zu einem in Aceton als Lösungsmittel hergestellten Isocyanat-Präpolymeren, bestehend aus 166 Teilen eines Polycaprolactons mit einem Molekulargewicht von 830, 4,5 Teilen Butandiol-1,4 und 128 Teilen Dicyclohexylmethandiisocyanat, werden 23,4 Teile Aminoäthyläthanolamin, gelöst in Aceton gegeben. Nach einer Reaktionszeit von $1/2$ Stunde bei einer Temperatur von 40° C werden 11,2 Teile Bernsteinsäureanhydrid zugesetzt. Bei einer Temperatur von 40° C ist die Umsetzung nach 15 Minuten beendet, so daß dann das Reaktionsprodukt mit 11,2 Teilen Triäthanolamin neutralisiert wird. Durch anschließende Zugabe von 69 Teilen eines Additionsproduktes aus 3 Mol Toluylendiisocyanat, 0,75 Mol Trimethylolpropan und 0,375 Mol Butandiol-1,3 als 75%ige Lösung in Äthylacetat und von 70 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Beispiel 5

Zu einem in Aceton als Lösungsmittel hergestellten Isocyanat-Prepolymeren, bestehend aus 232 Teilen eines Polycaprolactons mit einem Molekulargewicht von 830, 6,3 Teilen Butandiol-1,4, 59 Teilen Dicyclohexylmethandiisocyanat und 115 Teilen Diphenylmethandiisocyanat werden 33 Teile Aminoäthyläthanolamin, gelöst in Aceton gegeben. Nach einer Reaktionszeit von $1/2$ Stunde bei einer Temperatur von 40° C werden 15,7 Teile Bernsteinsäureanhydrid zugesetzt. Bei einer Temperatur von 40° C ist die Umsetzung nach 5 Minuten beendet, so daß dann das Reaktionsprodukt mit 15,7 Teilen Triäthanolamin neutralisiert wird. Durch anschließende Zugabe von 97 Teilen eines Additionsproduktes aus 3 Mol Toluylendiisocyanat, 0,75 Mol Trimethylolpropan und 0,375 Mol Butandiol-1,3 als 75%ige Lösung in Äthylacetat und von 150 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Beispiel 6

Zu einem in Aceton als Lösungsmittel hergestellten Isocyanat-Prepolymeren, bestehend aus 170 Teilen eines Polycaprolactons mit einem Molekulargewicht von 830, 4,5 Teilen Butandiol-1,4, 50 Teilen eines Epoxids auf Basis Bisphenol A mit einem Epoxidwert von 0,2 g Mol und 0,32 Hydroxylgruppen auf 100 g und einem Molekulargewicht von 900 sowie 148 Teilen Dicyclohexylmethandiisocyanat, werden 23,4 Teile Aminoäthyläthanolamin, gelöst in Aceton gegeben. Nach einer Reaktionszeit von 1 Stunde bei einer Temperatur von 40° C werden 11,2 Teile Bernsteinsäureanhydrid zugesetzt. Bei einer Temperatur von 40° C ist die Umsetzung nach 5 Minuten beendet, so daß dann das Reaktionsprodukt mit 11,2 Teilen Triäthanolamin neutralisiert wird. Zu 500 Teilen des resultierenden Polyurethanionomeren in Aceton werden 150 Teile einer 20%igen Lösung eines nichtionischen Polyurethans in Tetrahydrofuran, hergestellt aus 34,1 Teilen eines Polyesterdiols aus Adipinsäure und Butandiol-1,4 mit einem Molekulargewicht von 1000, 17,5 Teile Neopentylglykol, 0,5 Teile Trimethylolpropan und 49,7 Teile Diphenylmethandiisocyanat, eingerührt. Anschließend werden dazu unter Rühren 350 Teile Wasser gegeben und Aceton und Tetrahydrofuran sowie ein Teil des Wassers abdestilliert. Mit dieser wäßrigen Polyurethan-Dispersion wird, wie in Beispiel 1 beschrieben, ein Magnetband hergestellt. Die am Polymeren-Film und am Magnetband erhaltenen Meßergebnisse sind in der Tabelle angegeben.

## Beispiel 7

Es wird wie in Beispiel 4 beschrieben verfahren, jedoch ohne Zugabe der 69 Teile der 75%igen Lösung des Additionsproduktes aus 3 Mol Toluylendiisocyanat, 0,75 Mol Trimethylolpropan und 0,375 Butandiol-1,3 in Äthylacetat bei der Herstellung der Polyurethan-Dispersion. Die am Polymeren-Film und am Magnetband erhaltenen Meßergebnisse sind in der Tabelle angegeben.

## Beispiel 8

In 328 Teilen tert.Butanol werden 166 Teile eines Polycarbonats mit einem Molekulargewicht von 2000, 4,5 Teile Butandiol-1,4 sowie 158 Teile Dicyclohexylmethandiisocyanat gelöst und nach Zugabe einer katalytischen Menge an Dibutylzinndilaurat solange bei 50°C gerührt, bis der NCO-Gehalt 6% beträgt. Daraufhin werden 23,4 Teile Aminoäthyläthanolamin, gelöst in 324 Teilen Aceton zugegeben und nach 30 Minuten bei 40°C 22,4 Teile Triäthylamin und 22,4 Teile Bernsteinsäureanhydrid eingerührt. Nach 5 Minuten werden dazu 15,5 Teile Diäthylentriamin, gelöst in 1000 Teilen Wasser, gegeben und anschließend im Vakuum das Lösungsmittel abdestilliert. Mit dieser Polyurethan-Dispersion wird, wie in Beispiel 1 beschrieben, ein Magnetband hergestellt. Die am Polymeren-Film und am Magnetband erhaltenen Meßergebnisse sind in der Tabelle angegeben.

## Vergleichsversuch 1

Zu einem in Aceton als Lösungsmittel hergestellten Isocyanat-Prepolymeren, bestehend aus 170 Teilen eines Polycaprolactons mit einem Molekulargewicht von 830, 4,5 Teilen Butandiol-1,4, 50 Teilen eines Epoxids auf Basis Bisphenol A mit einem Epoxidwert von 0,2 g Mol und 0,32 Hydroxylgruppen auf 100 g und einem Molekulargewicht von 900 sowie 148 Teilen Dicyclohexylmethandiisocyanat, werden 23,4 Teile Aminoäthyläthanolamin, gelöst in Aceton gegeben. Nach einer Reaktionszeit von 1 Stunde bei einer Temperatur von 40°C werden 11,2 Teile Bernsteinsäureanhydrid zugesetzt. Bei einer Temperatur von 40°C ist die Umsetzung nach 5 Minuten beendet, so daß dann das Reaktionsprodukt mit 11,2 Teilen Triäthanolamin neutralisiert wird. Durch anschließende Zugabe von 73 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Vergleichsversuch 2

Zu einem in Aceton als Lösungsmittel hergestellten Isocyanat-Prepolymeren, bestehend aus 166 Teilen eines Polycaprolactons mit einem Molekulargewicht von 830, 4,5 Teilen Butandiol-1,4 und 128 Teilen Dicyclohexylmethandiisocyanat, werden 23,4 Teile Aminoäthyläthanolamin, gelöst in Aceton gegeben. Nach einer Reaktionszeit von 1 Stunde bei einer Temperatur von 50°C werden 11,2 Teile Bernsteinsäureanhydrid zugesetzt. Bei einer Temperatur von 40°C ist die Umsetzung nach 5 Minuten beendet, so daß dann das Reaktionsprodukt mit 11,2 Teilen Triäthanolamin neutralisiert wird. Durch anschließende Zugabe von 87 Teilen Wasser auf 30 Teile Polyurethanionomeres und Abdestillieren des Acetons wird eine stabile wäßrige Polyurethan-Dispersion erhalten. Damit wird, wie in Beispiel 1 beschrieben, ein Magnetband hergestellt. Die am Polymeren-Film und am Magnetband erhaltenen Meßergebnisse sind in der Tabelle angegeben.

## Vergleichsversuch 3

Ein handelsübliches Butylacrylat-Styrol-Copolymerisat mit geringen Acrylsäure- und Acrylamid-Anteilen mit den in der Tabelle angegebenen Filmeigenschaften wird gemäß Beispiel 1 anstelle der wäßrigen Polyurethan-Dispersion zur Herstellung eines Magnetbandes verwendet. Die Meßresultate sind in der Tabelle aufgeführt.

**0 020 951**

Vergleichsversuch 4

Eine handelsübliche wäßrige Polyurethan-Dispersion mit den in der Tabelle angegebenen Filmeigenschaften wird gemäß Beispiel 1 anstelle der dort hergestellten Dispersion zur Herstellung eines Magnetbandes verwendet. Die Meßresultate sind in der Tabelle angegeben.

Vergleichsversuch 5

Ein handelsübliches Vinylacetat-Maleinsäure-Copolymeres mit den in der Tabelle angegebenen Filmeigenschaften wird gemäß Beispiel 1 anstelle der dort hergestellten Dispersion zur Herstellung eines Magnetbandes verwendet. Die Meßresultate sind in der Tabelle angegeben.

Tabelle

| | Filmeigenschaften | | | | Magnetbandeigenschaften | | | | |
| | Pendelhärte | | E-Modul | | Test Nummer | | | | |
| | 50°C | 23°C | 50°C | 23°C | 1 | 2 | 3 | 4 | 5 |
| Beispiel 1 | 89 | 95 | 184 | 205 | 1,5 | 0,4/0,36 | 0,35 | — | nein |
| Beispiel 2 | 80 | 88 | 190 | 215 | 2,9 | — | — | 0,48 | nein |
| Beispiel 3 | 83 | 88 | 170 | 217 | 1,8 | 0,4/0,29 | 0,4 | 0,6 | nein |
| Beispiel 4 | 38 | 51 | 204 | 240 | 2,7 | — | — | 0,42 | nein |
| Beispiel 5 | 38 | 56 | 210 | 249 | 2,5 | 0,32/0,30 | 0,4 | 0,4 | nein |
| Beispiel 6 | 44 | 59 | 220 | 260 | 2,4 | 0,42/0,34 | 0,46 | — | nein |
| Beispiel 7 | 30 | 38 | 120 | 150 | 3,5 | — | 0,32 | — | nein |
| Beispiel 8 | 88 | 90 | 408 | 484 | 1,5 | 0,42/0,35 | 0,32 | 0,55 | nein |
| Vergl. Vers. 1 | 11 | 13 | <5 | <10 | 3,2 | 1,0/0,8 | klebt | klebt | Schicht-abzug |
| Vergl. Vers. 2 | 16 | 18 | 25 | 55 | 5,6 | 0,62/0,40 | 0,59 | 0,67 | — |
| Vergl. Vers. 3 | 2 | 16 | <5 | <10 | klebt | klebt | klebt | klebt | Schicht-abzug |
| Vergl. Vers. 4 | 21 | 81 | 56 | 440 | nicht meßbar | klebt | nicht meßbar | klebt | Schicht-abzug |
| Vergl. Vers. 5 | — | — | — | — | 6,8 | — | — | 0,4 | Schicht-abzug |

**Patentansprüche:**

1. Verfahren zur Herstellung schichtförmiger magnetischer Aufzeichnungsträger durch Dispergieren eines feinteiligen magnetisch anisotropen Materials in einem Bindemittel, das zu mindestens 40% aus einer wäßrigen ionomeren Polyurethandispersion besteht, Auftragen der Dispersion auf ein nichtmagnetisches Trägermaterial, Ausrichten des magnetisch anisotropen Materials und Trocknen der aufgetragenen Schicht, dadurch gekennzeichnet, daß durch den Einbau von Polyolen als Weichsegmente und Harnstoffgruppen in die Hartsegmente des Polyurethans eine wäßrige ionomere Polyurethandispersion erzeugt wird, mit der Maßgabe, daß sich bei einer Temperatur von 50°C Filme mit einem Elastizitätsmodul zwischen 100 und 650 N/mm$^2$ und einer Pendelhärte nach DIN 53 157 zwischen 25 und 110 s ergeben und daß sich die jeweiligen Werte für Elastizitätsmodul und Pendelhärte bei Raumtemperatur um nicht mehr als den Faktor 2,5 erhöhen.

2. Verfahren zur Herstellung schichtförmiger magnetischer Aufzeichnungsträger durch Dispergieren eines feinteiligen magnetisch anisotropen Materials in einem Bindemittelgemisch, das zu 40 bis

10

95% aus einer wäßrigen ionomeren Polyurethandispersion und zu 5 bis 60% aus einem nichtionischen Polymeren besteht, Auftragen der Dispersion auf ein nichtmagnetisches Trägermaterial, Ausrichten des magnetisch anisotropen Materials und Trocknen der aufgetragenen Schicht, dadurch gekennzeichnet, daß durch den Einbau von Polyolen als Weichsegmente und Harnstoffgruppen in die Hartsegmente des Polyurethans eine wäßrige ionomere Polyurethandispersion erzeugt wird, mit der Maßgabe, daß sich bei einer Temperatur von 50°C Filme mit einem Elastizitätsmodul zwischen 100 und 650 N/mm² und einer Pendelhärte nach DIN 53 157 zwischen 25 und 110 s ergeben und daß sich die jeweiligen Werte für Elastizitätsmodul und Pendelhärte bei Raumtemperatur um nicht mehr als den Faktor 2,5 erhöhen und das nichtionische Polymere ein thermoplastisches Polyurethan ist.

3. Verfahren gemäß Anspruch 1, dadurch gekennzeichnet, daß die wäßrigen ionomeren Polyurethandispersionen als alleiniges Bindemittel eingesetzt werden.

4. Verfahren gemäß einem der Ansprüche 1 bis 3, dadurch gekennzeichnet, daß die wäßrige Polyurethandispersion anionisch ist und einen pH-Wert von 6 bis 10 aufweist.

5. Verfahren gemäß Anspruch 4, dadurch gekennzeichnet, daß die wäßrige anionische Polyurethandispersion als Gegenion Ammoniak oder ein Amin mit einem Siedepunkt von kleiner 120°C aufweist.

**Claims**

1. A process for the manufacture of magnetic recording media by dispersing a finely divided magnetic anisotropic material in a binder which contains at least 40% of an aqueous ionomeric polyurethane dispersion, applying the dispersion to a non-magnetic base, orienting the magnetic anisotropic material and drying the applied coating, wherein an aqueous ionomeric polyurethane dispersion is produced by the incorporation of polyols, as soft segments, and of urea groups into the hard segments of the polyurethane, with the proviso that films are formed at 50°C which have a modulus of elasticity of from 100 to 650 N/mm² and a DIN 53 157 pendulum hardness of from 25 to 110 s, and that the corresponding values of the modulus of elasticity and pendulum hardness at room temperature are not more than 2.5 times higher.

2. A process for the manufacture of magnetic recording media by dispersing a finely divided magnetic anisotropic material in a binder consisting of 40 to 95% of an aqueous ionomeric polyurethane dispersion and 5 to 60% of a non-ionic polymer, applying the dispersion to a non-magnetic base, orienting the magnetic anisotropic material and drying the applied coating, wherein an aqueous ionomeric polyurethane dispersion is produced by the incorporation of polyols, as soft segments, and of urea groups into the hard segments of the polyurethane, with the proviso that films are formed at 50°C which have a modulus of elasticity of from 100 to 650 N/mm² and a DIN 53 157 pendulum hardness of from 25 to 110 s, and that the corresponding values of the modulus of elasticity and pendulum hardness at room temperature are not more than 2.5 times higher, and the non-ionic polymer is a thermoplastic polyurethane.

3. A process as claimed in claim 1, wherein the aqueous ionomeric polyurethane dispersion is employed as the sole binder.

4. A process as claimed in any of claims 1 to 3, wherein the aqueous polyurethane dispersion is anionic and has a pH of from 6 to 10.

5. A process as claimed in claim 4, wherein the aqueous anionic polyurethane dispersion contains ammonia, or an amine having a boiling point below 120°C, as the base which forms the counter-ion.

**Revendications**

1. Procédé de fabrication de support d'enregistrement magnétique en couche, par dispersion d'un matériau magnétiquement anisotrope finement divisé dans un liant, constitué, pour au moins 40%, d'une dispersion de polyuréthane ionomère, aqueuse, application de la dispersion sur un matériau support non magnétique, alignement du matériau anisotrope magnétique et séchage de la couche déposée, caractérisé par le fait que, par l'incorporation de polyols comme segments mous et de groupes urée dans les segments durs du polyuréthane, on obtient une dispersion de polyuréthane ionomère aqueuse, sous réserve qu'il en résulte, à une température de 50°C, des pellicules d'un module d'élasticité compris entre 100 et 650 N/mm² et une dureté au pendule, selon DIN 53 157, comprise entre 25 et 110 s et que, à la température ordinaire, les valeurs du module d'élasticité et de la dureté au pendule n'augmentent chacune pas de plus d'un facteur 2,5.

2. Procédé de fabrication de support d'enregistrement magnétique en couche, par dispersion d'un matériau magnétiquement anisotrope finement divisé dans un mélange de liant constitué, pour 40 à 95%, d'une dispersion de polyuréthane ionomère, aqueuse, et, pour 5 à 60% d'un polymère non ionique, application de la dispersion sur un matériau support non magnétique, alignement du matériau anisotrope magnétique et séchage de la couche déposée, caractérisé par le fait que, par l'incorporation de polyols comme segments mous et de groupes urée dans les segments durs du polyuréthane, on obtient une dispersion de polyuréthane ionomère aqueuse, sous réserve qu'il en résulte, à une

**0 020 951**

température de 50°C, des pellicules d'un module d'élasticité compris entre 100 et 650 N/mm$^2$ et une dureté au pendule, selon DIN 53 157, comprise entre 25 et 110 s et que, à la température ordinaire, les valeurs du module d'élasticité et de la dureté au pendule n'augmentent chacune pas de plus d'un facteur 2,5, et que le polymère non ionique soit un polyuréthane thermoplastique.

3. Procédé selon la revendication 1, caractérisé par le fait que les dispersions de polyuréthane ionomères, aqueuses, sont introduites comme unique liant.

4. Procédé selon l'une des revendications 1 à 3, caractérisé par le fait que la dispersion de polyuréthane aqueuse est anionique et possède un pH d'une valeur de 6 à 10.

5. Procédé selon la revendication 4, caractérisé par le fait que la dispersion de polyuréthane anionique aqueuse possède, comme ion complémentaire, l'ammoniac ou une amine d'un point d'ébullition inférieur à 120°C.